(19) Europäisches Patentamt / European Patent Office / Office européen des brevets

(11) **EP 2 995 363 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **15184298.6**

(22) Anmeldetag: **08.09.2015**

(51) Internationale Patentklassifikation (IPC):
**B01D 47/06** (2006.01)  **F28C 3/08** (2006.01)
**B05B 9/00** (2006.01)  **B01D 53/56** (2006.01)
**B01D 53/77** (2006.01)  **B01D 53/79** (2006.01)
**F23J 15/00** (2006.01)

(52) Gemeinsame Patentklassifikation (CPC):
**B01D 47/06; B01D 53/002; B01D 53/14;**
**F23J 15/04; F28C 3/08;** B01D 53/56; B01D 53/78;
B01D 2251/2067; B01D 2252/103; B01D 2257/404;
B01D 2258/0283

(54) **GASWÄSCHEVERFAHREN ZUR RASCHEN ABKÜHLUNG UND WÄSCHE VON ABGASE**

METHOD FOR SCRUBBING GASES AND RAPID COOLING OF GASES

PROCEDE DE LAVAGE DE GAZ ET DE REFROIDISSEMENT RAPIDE DE GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.09.2014 CH 13742014**

(43) Veröffentlichungstag der Anmeldung:
**16.03.2016 Patentblatt 2016/11**

(73) Patentinhaber: **Stucki, Robert**
**5436 Würenlos (CH)**

(72) Erfinder: **Stucki, Robert**
**5436 Würenlos (CH)**

(74) Vertreter: **Keller Schneider**
**Patent- und Markenanwälte AG**
**Eigerstrasse 2**
**Postfach**
**3000 Bern 14 (CH)**

(56) Entgegenhaltungen:
**EP-A1- 1 065 444    EP-A1- 2 168 688**
**WO-A1-99/56063    DE-C- 175 095**
**JP-A- 2003 254 678    NL-A- 7 712 583**

## Beschreibung

### Technisches Gebiet

Die vorliegende Erfindung beschreibt ein Gaswäscheverfahren, gemäß Anspruch 1, zur raschen Abkühlung und Wäsche von Abgasen innerhalb eines Gaswäschers mittels direktem in Kontaktbringen des Abgases mit einem flüssigen Kühlmittel, wobei Abgase unter einem Abgasdruck und einer ursprünglichen Abgastemperatur durch einen Abgaszuleitungskanal in den Innenraum des Gaswäschers eingeleitet werden und mit dem Kühlmittel unter einem definierten erhöhten Druck durch Beaufschlagung mittels einer Kühlmittelpumpe und unter einer definierten erhöhten Temperatur durch Erhitzung mittels einer Kühlmittelheizung nach Durchlaufen eines Kühlmittelzuleitungskanals vermischt werden, wobei das Kühlmittel in Bezug auf den Abgasdruck in Form einer überhitzten Flüssigkeit vorliegt, dessen erhöhte Temperatur grösser als die Siedetemperatur des Kühlmittels beim Abgasdruck ist.

### Stand der Technik

Die Abwärme von thermischen Maschinen und die Abwärme von Verbrennungsprozessen unterschiedlicher Art wird häufig genutzt, um Energie zurückzugewinnen und damit Energie zu sparen. Diese Abwärme fällt normalerweise in Form von heissen Abgasen an und wird mittels unterschiedlich ausgestalteten Wärmetauschern abgekühlt, womit diese Wärme genutzt wird.

Als Wärmetauscher werden beispielsweise Oberflächenwärmetauscher benutzt, bei denen die Wärmeenergie des heissen Abgases an ein anderes Fluid abgegeben wird, das durch eine Wand vom Abgas getrennt ist. Beide Fluide sind entsprechend voneinander physisch getrennt.

Eine andere Methode, das Abgas abzukühlen besteht darin, das Abgas als erstes gasförmiges Fluid durch Eindüsen eines Kühlmittels zu kühlen. Dazu wird ein Kühlmittel durch einen Kühlmittelzuleitungskanal bis in den Innenraum eines Gaskühlers mit dem Abgas geführt. Um einen möglichst guten Kühleffekt zu erreichen, wird der Druck des Kühlmittels mit einer Kühlmittelpumpe im Kühlmittelzuleitungskanal erhöht und das Kühlmittel anschliessend über Düsen im Gaskühler fein verteilt. Dabei kühlt sich das Gas ab und das Kühlmittel wärmt sich auf. Die Verweilzeit der Gase im Gaskühler ist gross, sodass sich daraus grosse Apparatedimensionen ergeben, die normalerweise als Sprühtürme gebaut werden.

Trotz apparativ aufwendigen Vorrichtungen und Verwendung von immer höheren Kühlmitteldrücken von bis zu 250 bar und speziell ausgeformten Düsen ist es nicht gelungen, die Tröpfchengrösse und damit die Apparatedimensionen wesentlich zu verringern.

Wie aus der GB474191 entnehmbar, ist eine Kühlung eines Abgases mittels eines Kühlmittels bekannt, wobei das Kühlmittel mit einer Temperatur über der Siedetemperatur des Kühlmittels bei Atmosphärenbedingungen in einen Gaskühler eingedüst wird. Eine geeignete Kühlung des Abgases ist aber nur mit hohem apparativem Aufwand zu erreichen. Hierbei ist es von besonderer Bedeutung, dass das Kühlmittel vollständig verdampft und das abzukühlende Abgas "trocken" und damit frei von Kühlmittel in flüssigem Aggregatzustand bleibt. Ein solches Verfahren bedingt eine aufwändige Regelung, damit kein Nebel im abgekühlten Abgas verbleibt.

Im Weiteren sind aus den Dokumenten NL 171125 B, EP 1 065 444 A1 sowie JP 2003254678 A jeweils Verfahren zur Reduzierung der Temperatur von Abgas unter Verwendung von Heisswasser bekannt, wobei insbesondere über dem Siedepunkt vorliegendes Wasser in die heissen Abgase gesprüht wird.

### Darstellung der Erfindung

Die vorliegende Erfindung hat sich zur Aufgabe gestellt ein vereinfachtes Verfahren zur optimierten Gaswäsche von Abgasen zu schaffen, welches zusätzlich zu einer beschleunigten raschen Abkühlung der Abgase führt und eine Wärmeauskopplung erlaubt.

Zur Lösung der Aufgabe wird ein kombiniertes Verfahren vorgeschlagen, welches die Tröpfchenbildung des eingespritzten Kühlmittels und damit die Kühlleistung und die Effizienz der Gaswäsche erhöht. Es wird im Gegensatz zum Stand der Technik mit einer überhitzten Flüssigkeit gearbeitet, welche in einer derart grossen Menge in den Gaswäscher eingebracht wird, dass Nebel und Abgas zu jeder Zeit in einem Gemisch vorliegen und eben kein "trockenes" Abgas erreicht wird. Durch den Nebel und damit Flüssigkeitströpfchen, die im Abgas gelöst sind, werden die Gaswäsche und die Kühlung erreicht.

### Kurze Beschreibung der Zeichnungen

Ein bevorzugtes Ausführungsbeispiel des Erfindungsgegenstandes und eine alternative Ausführungsform werden nachstehend im Zusammenhang mit den anliegenden Zeichnungen beschrieben.

Figur 1    zeigt eine schematische Ansicht einer Einspritzkühlvorrichtung zur Beschreibung des Verfahrens zur Abkühlung von Gasen bzw. Abgasen in einem Gaswäscher, während

Figur 2    eine schematische Ansicht einer Einspritzkühlvorrichtung gemäss Figur 1 mit zusätzlicher Wärmeauskopplungvorrichtung zeigt.

### Beschreibung

Es wird ein Gaswäscheverfahren bei gleichzeitiger rascher Abkühlung von Gasen oder Abgasen innerhalb eines Gaswäschers 1 einer Einspritzkühlvorrichtung 0 mittels Direktkontakt des Abgases mit einem flüssigen Kühlmittel beschrieben. Als rasch wird eine möglichst schnelle Abkühlung, innerhalb von Sekunden oder Bruchteilen von Sekunden, eines Abgases verstanden. Die Abgase können aus verschiedenen Verbrennungsprozessen, unter anderem von Wärmekraftmaschinen, wie beispielsweise Verbrennungsmotoren, oder industriellen Prozessen stammen und weisen ursprüngliche Abgastemperaturen Ta von mehr als 100°C bis zu über 1000°C auf.

Das Abgas wird durch einen Abgaszuleitungskanal 10 in den Gaswäscher 1 geleitet. Die dabei herrschenden Abgasdrücke pa liegen üblicherweise im Bereich des normalen Atmosphärendruckes. Das eingeleitete Abgas strömt wie mit den gestrichelten Pfeilen angedeutet durch den Gaswäscher 1 in Richtung einer Kaltgasauslassleitung 12.

In den Gaswäscher 1 ist ein Kühlmittelzuleitungskanal 11 von ausserhalb des Gaswäschers 1 kommend eingeführt angeordnet. Dieser Kühlmittelzuleitungskanal 11 führt im Betrieb ein flüssiges Kühlmittel Ki mit einer Anfangstemperatur T1.

Mittels einer Kühlmittelpumpe 110 wird das Kühlmittel Ki mit einem Druck p1 beaufschlagt. Im Verlaufe des Kühlmittelzuleitungskanals 11 ist eine Kühlmittelheizung 111 angeordnet, welche wahlweise ausserhalb des Gaswäschers 1 oder innerhalb des Gaswäschers 1 angeordnet sein kann. In der Kühlmittelheizung 111 wird das Kühlmittel Ki auf eine erhöhte Temperatur T2 erhitzt und bei einem erhöhtem Druck p2 zu einem in Bezug auf pa überhitzten Kühlmittel Ke. Die erhöhte Temperatur T2 wird so gewählt, dass ihr Wert über der Siedetemperatur des Kühlmittels bei Atmosphärendruck bzw. über der Siedetemperatur des Kühlmittels beim Abgasdruck pa liegt. Unter den physikalischen Bedingungen im Kühlmittelzuleitungskanal 11 im Bereich der Kühlmittelheizung 111 bzw. beim Durchlaufen der Kühlmittelheizung 111 bleibt das Kühlmittel flüssig, stellt aber bei dem Passieren einer Kühlmittelaustrittsdüse 112 eine überhitzte Flüssigkeit dar. Wird das erhitzte, unter Druck stehende Kühlmittel Ke in den Gasstrom im Gaswäscher 1 eingedüst, sinkt der Druck des Kühlmittel schlagartig auf den Gasdruck pa.

Da der Abgasdruck pa im Gaswäscher 1 geringer ist als im Kühlmittelzuleitungskanal 11, ist das in Bezug auf pa überhitzte Kühlmittel Ke nach Durchgang durch die Kühlmittelaustrittsdüse 112 in den Gaswäscher 1 in einem Zustand indem es spontan mindestens teilweise explosionsartig verdampft.

Aus der Kühlmittelaustrittsdüse 112, welche keine spezielle Formgebung aufweisen muss und frei von komplizierten bzw. empfindlichen Zerstäubungsdüsen ist, tritt das Kühlmittel aus und bildet sogleich ein Kühlmittel-Dampfgemisch D am Austritt der Kühlmittelaustrittsdüse 112. Das überhitzte Kühlmittel verdampft blitzartig und kühlt solange ab, bis die Verdampfungstemperatur des Kühlmittels beim Gasdruck pa erreicht wird. Das unter den physikalischen Bedingungen, insbesondere dem Druck pa innerhalb des Gaswäschers 1 überhitzte Kühlmittel Ke verdampft mindestens teilweise explosionsartig, wobei das Kühlmittel-Dampfgemisch D, umfassend eine Mischung aus Dampf und Flüssigkeitströpfchen, sich im Gaswäscher 1 in Richtung der Kaltgasauslassleitung 12 ausbreitet.

Aufgrund der Menge der Tröpfchen, welche extrem geringe Durchmesser von teilweise im Mittel kleiner 5 Mikrometern aufweisen, wird eine enorm grosse Wechselwirkungsoberfläche erzeugt mit entsprechend grossem Wärmeübergang durch den das Abgas seine Energie abgeben kann. Die erreichbare Wechselwirkungsoberfläche des Kühlmittels pro Masseneinheit ist deutlich grösser, als mit den Verfahren des Stands der Technik erreichbar.

Es wird eine rasche Abkühlung des heissen Abgas- bzw. Gasstroms durch Eindüsen und die Verneblung des vorgeheizten bzw. im Kühlmittelzuleitungskanal 11 in Bezug auf pa überhitzten Kühlmittels erreicht, da durch die explosionsartige Teilverdampfung des Kühlmittels Ke die extrem hohe Wechselwirkungsoberfläche der Tröpfchen erzeugt wird. Es muss ausreichend viel überhitztes Kühlmittel Ke in den Gaswäscher 1 gegeben werden, sodass gewährleistet ist, dass ein Nebel im Gaswäscher 1 resultiert. Die Wechselwirkungsoberfläche an welcher der Wärmeaustausch zwischen Gasteilchen und Kühlmittelteilchen in Form von Tröpfchen des Nebels erfolgen kann ist um ein Vielfaches grösser als gemäss Stand der Technik, wodurch eine verbesserte Gaswäsche und eine schnellere Abkühlung des Abgases bzw. Gasstromes erreichbar ist. Damit wird die Verweilzeit des Gasstromes im Gaswäscher 1 stark reduziert, was eine Verminderung des Gaswäschervolumens erlaubt. Es können Tröpfchengrössen von im Mittel weniger als 50 Mikrometer, sogar kleiner 10 Mikrometer erreicht werden.

Die explosionsartige Verdampfung des überhitzten Kühlmittels ist ein physikalischer Effekt, der von der Ausgestaltung der Kühlmittelaustrittsdüse 112 praktisch unabhängig ist. Es können wahlweise unterschiedlich geformte Kühlmittelaustrittsdüsen 112 befestigt oder ausgestaltet sein, diese definieren aber die entstehende Tröpfchengrösse nicht wesentlich. Der gewählte Druck p2 und die Temperatur T2 definieren den Grad der Überhitzung und damit die Grössenverteilung der resultierenden Tröpfchen samt Wechselwirkungsoberfläche. Im Gegensatz zu den bisher üblichen Systemen wird nicht kaltes flüssiges Kühlmittel zerstäubt eingedüst, sondern vorgängig unter Druck aufgeheiztes Kühlmittel Ke vernebelt, welches nach Durchgang durch die Kühlmittelaustrittsdüse 112 eine überhitzte Flüssigkeit ist und mindestens teilweise spontan verdampft.

Die Temperatur T2 des verwendeten Kühlmittels Ke muss höher sein als die Verdampfungstemperatur des Kühlmittels beim Druck pa des zu kühlenden Gases. Da Abgasdrücke üblicherweise im Bereich des normalen Atmosphärendruckes liegen, muss die Temperatur T2 die Verdampfungstemperatur bei normalem Atmosphärendruck übersteigen. Sollte der Abgasdruck pa höher liegen, muss auch die Temperatur T2 höher sein.

Aufgrund der erreichbaren kleinen Tröpfchengrösse resultieren eine vergrösserte spezifische Oberfläche des Kühlmittels und damit eine vergrösserte Wärmeübertragung. Die Wärmeübertragung ist definiert wie folgt:

$$Q = \alpha * A * (T1-T2) * \Delta t$$

wobei

Q = Wärmeübertragung in J oder kJ
$\alpha$ = Wärmeübergangskoeffizient W/m2 * K
A = Übertragungsfläche in m2
T1 = hohe Temperatur °C oder °K
T2 = tiefe Temperatur °C oder °K
$\Delta t$ = Zeiteinheit in s

Die Wärmeübertragung ist also abhängig von der Grösse der Übertragungsfläche A. Mit der Wärmeübertragung ist auch die Wärmeübertragungsleistung proportional zur Übertragungsfläche A. Da die Wärmeübertragungsleistung gemäss erfindungsgemässem Verfahren enorm vergrössert wird, braucht es viel weniger Zeit um das Gas abzukühlen. Eine wesentlich kürzere Verweilzeit des Gases im Gaswäscher 1 ist die Folge. Entsprechend kann der Gaswäscher 1 kleiner gestaltet sein, da die Zeit vom Eintritt des heissen Gases bis zum Zustand der gewünschten Abkühlung wesentlich verringert ist und nur noch Sekunden oder Bruchteile einer Sekunde beträgt.

Die verwendeten Abgasdrücke pa können wahlweise grösser gleich oder kleiner 1 bar gewählt werden, um die Vernebelung des Kühlmittels Ke zu erzeugen. Entsprechend müssen der erhöhte Druck p2 und die erhöhte Temperatur T2 des Kühlmittels Ke so gewählt werden, dass ein in Bezug auf den Abgasdruck pa überhitztes Kühlmittel Ke bereitgestellt wird.

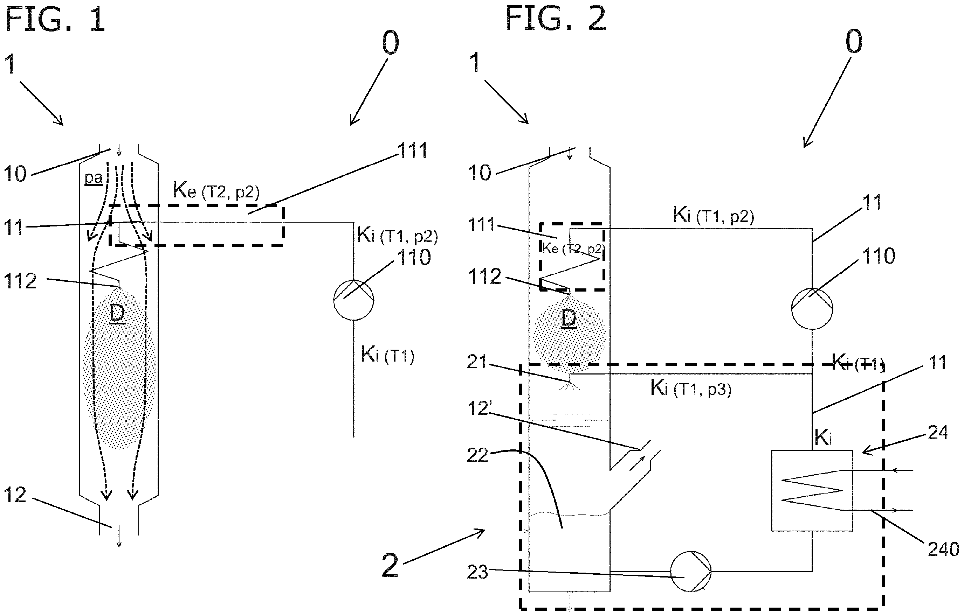

Wie in Figur 1 angedeutet, kann eine externe Kühlmittelheizung 111 verwendet werden, welche das in Bezug auf pa überhitzte Kühlmittel erzeugt. Die Kühlmittelpumpe 110 pumpt dabei das Kühlmittel Ke durch eine vollständig ausserhalb des Gaswäschers 1 liegende Kühlmittelheizung 111.

Um Energie zu sparen, kann die Kühlmittelheizung 111 so ausgestaltet sein, dass diese die Abwärme des zugeleiteten Abgases nutzt. Dazu kann die Kühlmittelheizung 111 mindestens teilweise innerhalb des Gaswäschers 1 angeordnet verlaufend ausgeführt sein. Das Abgas heizt entsprechend den Teil des Kühlmittelzuleitungskanals 11, welcher innerhalb des Gaswäschers 1 verläuft mit auf. Die maximal erreichbare erhöhte Temperatur des Kühlmittels Ke liegt dann unterhalb der ursprünglichen Abgastemperatur Ta.

Im Betrieb einer Einspritzkühlvorrichtung 0 gemäss Figur 1 wird ein Abgas durch den Abgaszuleitungskanal 10 in den Gaswäscher 1 unter einem Abgasdruck pa=1bar und einer ursprünglichen Abgastemperatur Ta von 300°C eingeleitet. Als Kühlmittel wird Wasser gewählt, wobei das in Bezug auf pa überhitzte Kühlmittel Ke eine erhöhte Temperatur T2 von 250°C und einen erhöhten Druck p2 von 120 bar aufweist. Der Druck p2 wird durch den Betrieb der Kühlmittelpumpe 110 aufgebracht und die Kühlmittelheizung 111 sorgt für die Erhitzung im Kühlmittelzuleitungskanal 11. Wie am Phasendiagramm des Wassers ablesbar ist, ist das Wasser unter T2 und p2 im flüssigen Aggregatzustand. Das Wasser ist aber bei Abgasdruck pa als überhitzt zu betrachten. Sobald dieses in Bezug auf pa überhitzte Wasser durch den Kühlmittelauslass 112 in den Gaswäscher 1 entlassen wird bzw. auf den Druck von 1 bar entspannt wird, findet die teilweise explosionsartige Verdampfung unter Tröpfchen- und Dampfbildung statt. Das dabei entstehende Kühlmittel- und -dampf-Gemisch D, in diesem Fall Wasser- und Wasserdampf-Gemisch D weist eine Temperatur von 100° C und 1 bar auf, während der anschliessende Wärmeaustausch mit dem Abgas erfolgt, wobei auch das Abgas bis auf 100 °C bei 1 bar Druck gekühlt wird. In der Regel wird das überschüssige Kühlmittel, falls vorhanden, nach Durchlauf durch die Einspritzkühlvorrichtung 0 aufgefangen und später wieder verwendet.

Im Gegensatz zu aus dem Stand der Technik bekannten Verfahren, wird hier mit einer derart grossen Menge überhitzten flüssigen Kühlmittel Ke gearbeitet, dass keine vollständige Verdampfung des Kühlmittels Ke bei der Eindüsung entsteht. Es bleibt zu jeder Zeit ein Abgas-Nebel-Gemisch oder Abgas-flüssiges Kühlmittel Ke-Gemisch im Gaswäscher 1 vorhanden, wobei das Abgas eben nicht trocken ist. Die Gaswäsche kann so effizienter Ablaufen und die Kühlung des Abgases erfolgt optimiert, wobei keine besonderen Vorkehrungen zur Steuerung des Verfahrens notwendig sind. Es muss dafür gesorgt werden, dass ausreichend viel Kühlmittel Ke zugeführt wird, sodass das Abgas-Nebel-Gemisch im Gaswäscher verbleibt. Die notwendige Menge des überhitzten Kühlmittels Ke findet der Fachmann durch Einstellungen der Zuführmenge heraus, wobei ein Nebel erreicht sein muss.

In Figur 2 ist eine Einspritzkühlvorrichtung 0 gemäss Figur 1 dargestellt, mit welcher das Verfahren zur Abkühlung eines Abgases durchführbar ist. Die Kühlmittelpumpe 110 sorgt für die Druckbeaufschlagung des Kühlmittels auf p2=120 bar. Die Kühlmittelheizung 111 ist hier vollständig innerhalb des Gaswäschers 1 gelagert, wobei ein Teil der Wärmeenergie des Abgases zur Aufheizung des Kühlmittels Ke, welches hier Wasser ist, von T1 auf die erhöhte Temperatur T2, hier von 250°C genutzt wird. Nach Verneblung des Wassers wie oben beschrieben bildet sich explosionsartig ein Gas-Wasser-Dampf Gemisch D mit einer Temperatur von 100°C bei einem Druck von 1 bar innerhalb des Gaswäschers 1. Das Abgas wird entsprechend von seiner ursprünglichen Abgastemperatur Ta von 300°C abgekühlt.

An die Einspritzkühlvorrichtung 0 ist hier eine Wärmeauskopplungsvorrichtung 2 angeschlossen. Aus einem zweiten Kühlmittelauslass 21 wird ein zweites Kühlmittel, hier nochmals Wasser, mit einer Temperatur von 30°C bei einem Druck p3 von etwa 3 bar in den Gaswäscher 1 eingesprayt. Diese Wärmeauskopplungsvorrichtung 2 wird wie aus dem Stand der Technik bekannt als Spraykühler ausgestaltet. Das auf etwa 100°C abgekühlte Gas bildet mit dem eingesprayten zweiten Kühlmittel ein Gas-Wasser-Gemisch von etwa 70°C bei 1 bar Druck. Das so weiter abgekühlte Abgas wird durch eine Kaltgasauslassleitung 12' aus dem Gaswäscher 1 entlassen.

Das zweite Kühlmittel sammelt sich am Boden des Gaswäschers 1 in einem Kühlmittelsammelraum 22 mit einer Temperatur von etwa 70°C, von wo es mittels einer Kühlmittelpumpe 23 in einen Wärmetauscher 24 und durch diesen hindurch gepumpt wird. Innerhalb des Wärmetauschers 24 kann die Abwärme des zweiten Kühlmittels von einem zirkulierenden dritten Kühlmittel aufgenommen werden und beispielsweise als Heizenergie verwendet werden. Ein Kühlmittelkreislauf 240 des dritten Kühlmittels ist hier nur angedeutet.

Nach der weiteren Abkühlung des zweiten Kühlmittels auf etwa 30°C bei einem Druck von 3 bar kann das zweite Kühlmittel zu einem Teil als zweites Kühlmittel durch den zweiten Kühlmittelauslass 21 unter niedrigem Druck p3 von etwa 3 bar eingesprayt oder durch den Kühlmittelauslass der Einspritzkühlvorrichtung 0 unter hohem Druck p2 in den Gaswäscher 1 vernebelt eingebracht werden.

Das hier vorgestellte Verfahren zur Kühlung eines Gasstromes bzw. die Einspritzkühlvorrichtung 0 können vor allem auch zur Abgasreinigung verwendet werden. Sollte das zugeführte Abgas Staub- oder andere Schwebeteilchen, sowie Rauch oder Russpartikel aufweisen, dann hilft auch die feine Vernebelung der Kühlmittel- bzw. der Kühlmitteldampftröpfchen bei der Reinigung. Die störenden Partikel werden aufgrund der extrem grossen Wechselwirkungsoberfläche leichter eingefangen und gebunden, sodass sie aus dem Abgasstrom entfernt werden. Der immer vorhandene flüssige Anteil des überhitzten Kühlmittels Ke bindet Rauch- oder Staubpartikel besonders effizient. Wahlweise können dem Kühlmittel Chemikalien zur verbesserten Gaswäsche beigegeben werden, beispielsweise Harnstoff zur Entstickung.

Neben der Abgasreinigung ist mit dem hier beschriebenen Verfahren auch eine Geruchsminderung der Abgase effizient erreichbar. Ist also eine zusätzliche Beseitigung von Gerüchen gefragt, ist die Durchführung des oben beschriebenen Verfahrens vorteilhaft.

**Bezugszeichenliste**

0 Einspritzkühlvorrichtung
1 Gaswäscher
10 Abgaszuleitungskanal
11 Kühlmittelzuleitungskanal

110 Kühlmittelpumpe
111 Kühlmittelheizung
112 Kühlmittelaustrittsdüse

12 Kaltgasauslassleitung

Ki Kühlmittel
Ke Kühlmittel in Bezug auf pa überhitzt (T2, p2)
D Kühlmittel und -dampf-Gemisch (Ta, pa)
pa Abgasdruck
Ta ursprüngliche Abgastemperatur
T2 erhöhte Temperatur
p2 erhöhter Druck
2 Wärmeauskopplungsvorrichtung (Spraykühler + Wärmetauscher)
20 zweiter Kühlmittelzuleitungskanal
21 zweiter Kühlmittelauslass
22 Kühlmittelsammelraum
23 Kühlmittelpumpe
24 Wärmetauscher
240 Kühlmittelkreislauf

**Patentansprüche**

1. Gaswäscheverfahren zur raschen Abkühlung und Wäsche von Abgasen innerhalb eines Gaswäschers (1) mittels direktem in Kontaktbringen des Abgases mit einem flüssigen Kühlmittel (Ke), wobei Abgase unter einem Abgasdruck (pa) und einer ursprünglichen Abgastemperatur (Ta) durch einen Abgaszuleitungskanal (10) in den Innenraum des Gaswäschers (1) eingeleitet werden und

mit dem Kühlmittel (Ke)unter einem definierten erhöhten Druck (p2) durch Beaufschlagung mittels einer Kühlmittelpumpe (110) und unter einer definierten erhöhten Temperatur (T2) durch Erhitzung mittels einer Kühlmittelheizung (111) nach Durchlaufen eines Kühlmittelzuleitungskanals (11) vermischt werden, wobei das Kühlmittel (Ke) in Bezug auf den Abgasdruck (pa) in Form einer überhitzten Flüssigkeit vorliegt, dessen erhöhte Temperatur (T2) grösser als die Siedetemperatur des Kühlmittels (Ke) beim Abgasdruck (pa) ist, wobei das in Bezug auf den Abgasdruck (pa) überhitzte Kühlmittel (Ke) in einer derart grossen Menge durch eine Kühlmittelaustrittsdüse (112) in den Gaswäscher (1) eingebracht wird, dass das Kühlmittel (Ke)mindestens teilweise explosionsartig verdampft und vernebelt wird, sodass im Gaswäscher (1) ein Abgas-flüssiges Kühlmittel (Ke)-Gemisch, umfassend Flüssigkeitströpfchen mit Durchmessern kleiner 50 Mikrometer, insbesondere kleiner 10 Mikrometer entsteht, woran anschliessend nach erster Abkühlung das Abgas- Kühlmittelgemisch durch eine Wärmeauskopplungsvorrichtung (2) durchgeführt wird, wobei aus einem zweiten Kühlmittelauslass (21) ein zweites Kühlmittel in den Gaswäscher (1) eingesprayt wird und das abgekühlte Abgas-Kühlmittelgemisch durch Wechselwirkung mit dem zweiten flüssigen Kühlmittel weiter abgekühlt wird, bevor es aus einer Kaltgasauslassleitung (12') aus dem Gaswäscher (1) entnommen wird, bevor das zweite Kühlmittel aus einem Kühlmittelsammelraum (22) mittels einer Kühlmittelpumpe (23) in einen Wärmetauscher (24) und durch diesen hindurch gepumpt wird, wobei innerhalb des Wärmetauschers (24) die Abwärme des zweiten Kühlmittels von einem zirkulierenden dritten Kühlmittel aufgenommen und beispielsweise als Heizenergie verwendet wird.

2. Gaswäscheverfahren nach Anspruch 1, wobei die definierte erhöhte Temperatur (T2) des Kühlmittels (Ke) vor der Einleitung in den Innenraum des Gaswäschers (1) grösser als 100°C und der definierte Druck (p2) auf das Kühlmittel vor der Einleitung in den Innenraum des Gaswäschers (1) grösser als 1 bar und kleiner als 120 bar ist.

3. Gaswäscheverfahren nach Anspruch 2, wobei das Kühlmittel (Ke) mit Drücken kleiner gleich 10 bar beaufschlagt und auf Temperaturen kleiner gleich 175°C in Bezug auf pa überhitzt wird, bevor es aus dem Kühlmittelauslass (112) in den Gaswäscher (1) gepumpt wird.

4. Gaswäscheverfahren nach einem der vorhergehenden Ansprüche, wobei die Vernebelung bei Abgasdrücken (pa) kleiner 1 bar, bei entsprechender Wahl des erhöhten Druckes (p2) und der erhöhten Temperatur (T2) des Kühlmittels (Ke), durchgeführt wird.

5. Gaswäscheverfahren nach einem der vorhergehenden Ansprüche, wobei die Überhitzung des Kühlmittels (Ke) ausserhalb des Gaswäschers (1) durch eine externe Kühlmittelheizung (111) erfolgt.

6. Gaswäscheverfahren nach einem der vorhergehenden Ansprüche, wobei die Überhitzung des Kühlmittels (Ke) durch eine teilweise Durchführung des Kühlmittelzuleitungskanals (11) durch den Gaswäscher (1) und damit mit einer mindestens teilweise innerhalb des Gaswäschers (1) angeordneten Kühlmittelheizung (111) erfolgt.

7. Gaswäscheverfahren nach einem der vorhergehenden Ansprüche, wobei das Kühlmittel (Ke) Wasser ist.

8. Gaswäscheverfahren nach einem der vorhergehenden Ansprüche, wobei das Kühlmittel (Ke) rezykliert wird.

9. Gaswäscheverfahren nach einem der vorhergehenden Ansprüche, wobei das Kühlmittel (Ke) Chemikalien zur Gaswäsche umfasst, beispielsweise Harnstoff zur Entstickung.

10. Gaswäscheverfahren nach einem der vorhergehenden Ansprüche, wobei nach der weiteren Abkühlung des zweiten Kühlmittels, das zweite Kühlmittel zu einem Teil als zweites Kühlmittel durch den zweiten Kühlmittelauslass (21) eingesprayt oder durch den Kühlmittelauslass der Einspritzkühlvorrichtung (0) in den Gaswäscher (1) vernebelt eingebracht wird.

## Claims

1. Gas scrubbing process for the rapid cooling and scrubbing of exhaust gases within a gas scrubber (1) by bringing the exhaust gas directly into contact with a liquid coolant (Ke),

   wherein exhaust gases are introduced into the interior of the gas scrubber (1) at an exhaust gas pressure (pa) and at an original exhaust gas temperature (Ta) through an exhaust gas supply duct (10) and are mixed with the coolant (Ke) at a defined elevated pressure (p2) by admission by means of a coolant pump (110) and at a defined elevated temperature (T2) by heating by means of a coolant heater (111) after passing through a coolant supply duct (11),
   wherein the coolant (Ke) is present, in relation to the exhaust gas pressure (pa), in the form of a superheated liquid, the elevated temperature (T2) of which is greater than the boiling temperature of the coolant (Ke) at the exhaust gas pressure (pa),
   wherein the coolant (Ke), which is superheated with respect to the exhaust gas pressure (pa), is introduced into the gas scrubber (1) through a coolant outlet nozzle (112) in such a large quantity that the coolant (Ke) is at least partially explosively vaporised and atomised
   so that an exhaust gas-liquid coolant (Ke) mixture is formed in the gas scrubber (1), which mixture comprises liquid droplets with diameters of less than 50 micrometres, in particular less than 10 micrometres,
   whereupon, after first cooling, the exhaust gas-coolant mixture is passed through a heat extraction device (2), wherein a second coolant is sprayed from a second coolant outlet (21) into the gas scrubber (1) and the cooled exhaust gas-coolant mixture is further cooled by interaction with the second liquid coolant before it is removed from the gas scrubber (1) from a cold gas outlet pipe (12'),

before the second coolant is pumped from a coolant reservoir (22) by means of a coolant pump (23) into and through a heat exchanger (24), wherein

wherein inside the heat exchanger (24) the waste heat of the second coolant is absorbed by a circulating third coolant and used, for example, as heating energy.

2. Gas scrubbing process according to claim 1, wherein the defined elevated temperature (T2) of the coolant (Ke) before introduction into the interior of the gas scrubber (1) is greater than 100°C and the defined pressure (p2) on the coolant before introduction into the interior of the gas scrubber (1) is greater than 1 bar and less than 120 bar.

3. Gas scrubbing process according to claim 2, wherein the coolant (Ke) is subjected to pressures less than or equal to 10 bar and is superheated to temperatures less than or equal to 175°C with respect to pa before it is pumped out of the coolant outlet (112) into the gas scrubber (1).

4. Gas scrubbing process according to any of the preceding claims, wherein the atomisation is carried out at exhaust gas pressures (pa) of less than 1 bar, with corresponding selection of the increased pressure (p2) and the increased temperature (T2) of the coolant (Ke).

5. Gas scrubbing process according to any of the preceding claims, wherein the superheating of the coolant (Ke) takes place outside the gas scrubber (1) by means of an external coolant heater (111).

6. Gas scrubbing method according to any of the preceding claims, wherein the superheating of the coolant (Ke) is effected by a partial passage of the coolant supply duct (11) through the gas scrubber (1) and thus with a coolant heater (111) arranged at least partially inside the gas scrubber (1).

7. Gas scrubbing method according to any of the preceding claims, wherein the coolant (Ke) is water.

8. Gas scrubbing process according to any of the preceding claims, wherein the coolant (Ke) is recycled.

9. Gas scrubbing process according to any of the preceding claims, wherein the coolant (Ke) comprises gas scrubbing chemicals, for example urea for denitrification.

10. Gas scrubbing method according to any of the preceding claims, wherein after further cooling of the second coolant, the second coolant is partly sprayed as second coolant through the second coolant outlet (21) or introduced, in atomised form, through the coolant outlet of the injection cooling device (0) into the gas scrubber (1).

**Revendications**

1. Procédé de lavage de gaz pour le refroidissement et le lavage rapides des gaz d'échappement à l'intérieur d'un laveur de gaz (1) en mettant les gaz d'échappement directement en contact avec un réfrigérant liquide (Ke),

dans lequel les gaz d'échappement sont introduits à l'intérieur du laveur de gaz (1) à une pression de gaz d'échappement (pa) et à une température de gaz d'échappement initiale (Ta) par un conduit d'amenée de gaz d'échappement (10) et sont mélangés avec le réfrigérant (Ke) à une pression élevée définie (p2) par admission au moyen d'une pompe à réfrigérant (110) et à une température élevée définie (T2) par chauffage au moyen d'un réchauffeur de réfrigérant (111) après avoir traversé un conduit d'amenée de réfrigérant (11),

dans lequel le réfrigérant (Ke) est présent, par rapport à la pression des gaz d'échappement (pa), sous la forme d'un liquide surchauffé, dont la température élevée (T2) est supérieure à la température d'ébullition du réfrigérant (Ke) à la pression des gaz d'échappement (pa),

dans lequel le liquide de refroidissement (Ke) surchauffé par rapport à la pression des gaz d'échappement (pa) est introduit dans le laveur de gaz (1) par une buse de sortie du liquide de refroidissement (112) en une quantité si importante que le liquide de refroidissement (Ke) est au moins partiellement vaporisé et atomisé de manière explosive

de sorte qu'il se forme dans le laveur de gaz (1) un mélange de gaz d'échappement et de liquide de refroidissement (Ke), qui comprend des gouttelettes de liquide ayant un diamètre inférieur à 50 micromètres, en particulier inférieur à 10 micromètres,

après quoi, après un premier refroidissement, le mélange de gaz d'échappement et de réfrigérant passe par un dispositif d'extraction de chaleur (2), dans lequel un second réfrigérant est pulvérisé à partir d'une seconde sortie de réfrigérant (21) dans le laveur de gaz (1) et le mélange de gaz d'échappement et de réfrigérant refroidi est encore refroidi par interaction avec le second réfrigérant liquide

avant qu'il ne soit évacué du laveur de gaz (1) par une conduite de sortie de gaz froid (12'), avant que le second réfrigérant soit pompé d'un espace de collecte de réfrigérant (22) au moyen d'une pompe à réfrigérant (23) dans et à travers un échangeur de chaleur (24), dans lequel dans lequel, à l'intérieur de l'échangeur de chaleur (24), la chaleur perdue du deuxième réfrigérant est absorbée par un troisième réfrigérant en circulation et utilisée, par exemple, comme énergie de chauffage.

2. Procédé de lavage de gaz selon la revendication 1, dans lequel la température élevée définie (T2) du réfrigérant (Ke) avant l'introduction à l'intérieur du laveur de gaz (1) est supérieure à 100°C et la pression définie (p2) sur le réfrigérant avant l'introduction à l'intérieur du laveur de gaz (1) est supérieure à 1 bar et inférieure à 120 bar.

3. Procédé de lavage de gaz selon la revendication 2, dans lequel le liquide de refroidissement (Ke) est soumis à des pressions inférieures ou égales à 10 bars et est surchauffé à des températures inférieures ou égales à 175°C par rapport à pa avant d'être pompé de la sortie du liquide de refroidissement (112) dans le laveur de gaz (1).

4. Procédé de lavage de gaz selon l'une quelconque des revendications précédentes, dans lequel l'atomisation est réalisée à des pressions de gaz d'échappement (pa) inférieures à 1 bar, avec une sélection correspondante de la pression accrue (p2) et de la température accrue (T2) du liquide de refroidissement (Ke).

5. Procédé de lavage de gaz selon l'une quelconque des revendications précédentes, dans lequel la surchauffe du fluide de refroidissement (Ke) a lieu à l'extérieur du laveur de gaz (1) au moyen d'un réchauffeur externe de fluide de refroidissement (111).

6. Procédé de lavage de gaz selon l'une quelconque des revendications précédentes, dans lequel la surchauffe du fluide de refroidissement (Ke) s'effectue par un passage partiel du conduit d'alimentation en fluide de refroidissement (11) à travers le laveur de gaz (1) et donc avec un réchauffeur de fluide de refroidissement (111) disposé au moins partiellement à l'intérieur du laveur de gaz (1).

7. Procédé de lavage de gaz selon l'une quelconque des revendications précédentes, dans lequel le fluide de refroidissement (Ke) est de l'eau.

8. Procédé de lavage de gaz selon l'une quelconque des revendications précédentes, dans lequel le fluide de refroidissement (Ke) est recyclé.

9. Procédé de lavage de gaz selon l'une quelconque des revendications précédentes, dans lequel le liquide de refroidissement (Ke) comprend des produits chimiques de lavage de gaz, par exemple de l'urée pour la dénitrification.

10. Procédé de lavage de gaz selon l'une quelconque des revendications précédentes, dans lequel, après un refroidissement supplémentaire du deuxième fluide de refroidissement, le deuxième fluide de refroidissement est partiellement pulvérisé sous forme de deuxième fluide de refroidissement par la deuxième sortie de fluide de refroidissement (21) ou introduit, sous forme atomisée, par la sortie de fluide de refroidissement du dispositif de refroidissement par pulvérisation (0) dans le laveur de gaz (1).

# FIG. 1

Ke (T2, p2)

Ki (T1, p2)
110

Ki (T1)

111

10

11

112

12

D

pa

O

1

# FIG. 2

O

11

110

Ki (T1)

11

24

240

Ki (T1, p2)

Ki

W

Ki (T1, p3)

10

Ke (T2, p2)

111

112

D

21

12'

22

23

2

1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 474191 A
- NL 171125 B
- EP 1065444 A1
- JP 2003254678 A